# EUROPÄISCHE PATENTSCHRIFT

(11) **EP 0 624 453 B1**
(45) Veröffentlichungstag und Bekanntmachung des Hinweises auf die Patenterteilung: **08.05.1996**
(21) Anmeldenummer: 94102358.2
(22) Anmeldetag: 17.02.1994
(51) Int. Cl.: B29C 51/42

(54) **Wärmeschrank**
Heating cabinet
Armoire chauffante

(30) Priorität: 10.05.1993 DE 9307066 U
(43) Veröffentlichungstag der Anmeldung: 17.11.1994
(73) Patentinhaber: Otto Bock Orthopädische Industrie Besitz- und Verwaltungs-Kommanditgesellschaft, D-37115 Duderstadt (DE)
(72) Erfinder: Stender, Adolf Dipl.-Ing., 37115 Duderstadt (DE)
(74) Vertreter: Gramm, Werner, Prof., Dipl.-Ing.

(56) Entgegenhaltungen:
- DE-U- 8 814 901
- FR-A- 2 458 372

## Beschreibung

Die Erfindung betrifft einen Wärmeschrank zur Herstellung tiefgezogener Kunststoff-Schäfte, insbesondere für den Prothesenbau.

Es ist bekannt, eine tiefzuziehende Kunststofftafel in einen Rahmen oder dergleichen einzuspannen und in einem Wärmeschrank durch Beaufschlagung mit Heißluft tiefzuziehen. So werden z. B. tiefgezogene Prothesenschäfte hergestellt.

Als nachteilig hat sich hierbei herausgestellt, daß bei dem nach dem Weichwerden der Kunststoffplatte einsetzenden Tiefziehvorgang unter der Einwirkung der Schwerkraft eine Materialansammlung im unteren Spitzenbereich des Stumpfes auftritt; der tiefgezogene Prothesenstumpf weist somit ungleiche Wandungsstärken auf, wobei die Wandung im oberen Randbereich am dünnsten ist.

Der Erfindung liegt die Aufgabe zugrunde, einen Wärmeschrank zu entwickeln, mit dem sich tiefgezogene Kunststoffschäfte, insbesondere Prothesenschäfte mit weitgehend konstanter Wandungsstärke herstellen lassen.

Diese Aufgabe wird erfindungsgemäß durch folgende Merkmale gelöst:
a) ein im Schrankinnenraum aufrecht festlegbarer, angenähert trichterförmig ausgebildeter Tiefzieheinsatz;
b) der Tiefzieheinsatz ist als Luftleiteinrichtung ausgebildet, wobei seine untere, den kleinsten Durchmesser aufweisende Öffnung den Lufteintrittsquerschnitt und seine obere, den größten Durchmesser aufweisende Öffnung den Luftaustrittsquerschnitt definieren;
c) der Tiefzieheinsatz weist unmittelbar oberhalb seiner oberen Luftaustrittsöffnung eine Plattenaufnahme zur angenähert horizontalen Aufnahme einer tiefzuziehenden Kunststofftafel auf;
d) eine die Luft im geschlossenen Kreislauf führende Luftführung mit zumindest einer oberen, insbesondere die aus dem Tiefzieheinsatz austretende Luft aus dem Schrankinnenraum absaugenden Luftabsaugöffnung, an die ein außerhalb des Schrankinnenraumes angeordneter Luftumführkanal angeschlossen ist, der ein Umluftgebläse sowie eine die abgesaugte Luft erwärmende Heizung aufweist und an zumindest eine untere, in den Schrankinnenraum mündende Lufteinblasöffnung angeschlossen ist.

Wesentlich ist die erfindungsgemäß vorgesehene Luftströmung von unten nach oben durch den Tiefzieheinsatz hindurch, der die erhitzte Luft gezielt von unten gegen die tiefzuziehende Kunststofftafel anströmen läßt. Die Luft umspült somit gleichmäßig das vorzugsweise in einem Spannrahmen befindliche Plattenmaterial. Der unter der Schwerkraft einsetzende Tiefziehvorgang erfolgt somit der Luftströmung entgegen. Versuche haben überraschend gezeigt, daß sich bei diesem Tiefziehvorgang gleiche Wandungsstärken einstellen.

Es ist zweckmäßig, wenn der Tiefzieheinsatz in eine entsprechende Aussparung eines in den Schrankinnenraum einschiebbaren Einschubs eingesetzt ist. Dies erleichtert die Handhabung.

Wenn der Einschub im übrigen geschlossen ausgebildet ist, ergibt sich eine zwangsweise Luftführung durch die Aussparung des Einschubs hindurch. Diese Luftführung wird vor allem dann sichergestellt, wenn die Luftabsaugöffnung oberhalb und die Lufteinblasöffnung unterhalb des Einschubs angeordnet sind.

Weitere Merkmale der Erfindung sind Gegenstand der Unteransprüche und werden in Verbindung mit weiteren Vorteilen der Erfindung anhand eines Ausführungsbeispieles näher erläutert.

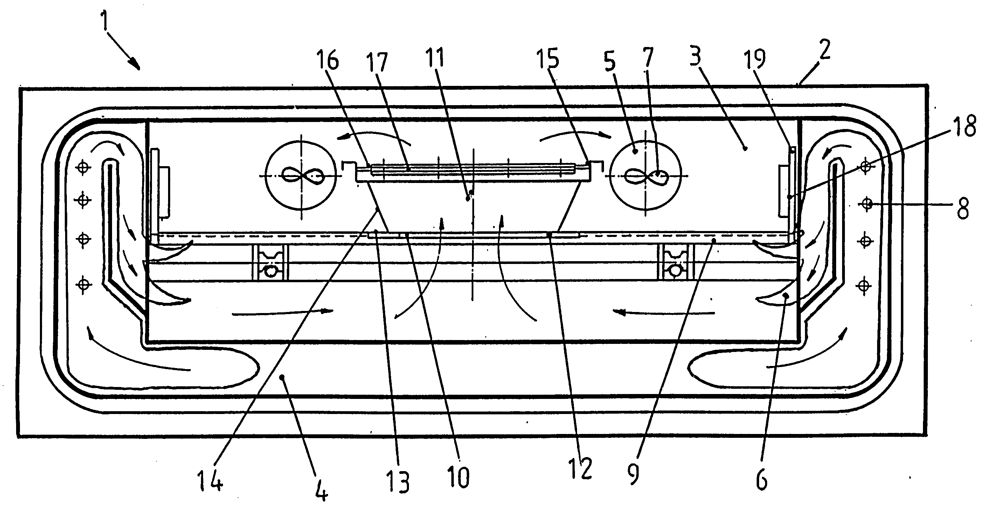

In der Zeichnung ist eine als Beispiel dienende Ausführungsform der Erfindung schematisch in einem lotrechten Schnitt dargestellt.

Gezeigt ist im Ausschnitt ein Wärmeschrank 1 mit einem Außengehäuse 2, einem den Schrankinnenraum bildenden Innenkessel 3 und einem dazwischen angeordneten Luftumführkanal 4. Letzterer ist an eine obere Luftabsaugöffnung 5 des Innenkessels 3 angeschlossen und mündet in eine untere Lufteinblasöffnung 6 des Innenkessels 3. In diesen Luftumführkanal 4 ist ein Umluftgebläse 7 sowie eine die abgesaugte Luft erwärmende Heizung 8 geschaltet.

In den Innenkessel 3 einschiebbar ist ein auf Rollen gelagerter Einschub 9, der als geschlossenes Blech ausgebildet sein kann und eine Aussparung 10 aufweist, in die ein Tiefzieheinsatz 11 mit einem untern Fixierring 12 eingesetzt ist. Der Tiefzieheinsatz 11 weist einen sich von einer Fußplatte 13 nach oben konusförmig erweiternden Trichter 14 auf, der an seinem oberen Rand in eine Plattenaufnahme 15 übergeht. In diese Plattenaufnahme 15 ist ein Spannrahmen 16 einlegbar, in den eine tiefzuziehende Kunststofftafel 17 eingespannt ist.

Die Zeichnung läßt erkennen, daß die Luftabsaugöffnung 5 oberhalb und die Lufteinblasöffnung 6 unterhalb des Einschubes 9 angeordnet sind. Dadurch ergibt sich die durch Pfeile verdeutlichte Luftführung: Die aus dem Innenkessel 3 über das Umluftgebläse 7 abgesaugte Luft wird über die Heizung 8 geführt, dort wieder erwärmt und dann unterhalb des Einschubs 9 durch die Lufteinblasöffnung 6 wieder in den Innenkessel 3 geblasen, von wo sie durch die Aussparung 10 des Einschubs 9 in die untere Öffnung des Tiefzieheinsatzes 11 einströmt und von diesem gezielt gegen die Unterseite der eingespannten Kunststofftafel 17 geführt wird. Dort strömt die Luft seitlich ab, um wieder unmittelbar durch die Luftabsaugöffnung 5 abgesaugt und erneut aufgeheizt zu werden. Aufgrund dieser gezielten Luftführung ergibt sich eine optimale Thermik, die eine gleichmäßige Wandungsstärke des tiefgezogenen Prothesenschaftes gewährleistet.

Um den Wärmeschrank 1 ggf. auch für andere Erzeugnisse, z. B. zur Erwärmung großflächiger Kunststoffplatten verwenden zu können, die eine gleichzeitige Beaufschlagung mit Warmluft auf ihrer Ober- und Unterseite erfordern, ist in dem dargestellten Ausführungsbeispiel auch oberhalb des Einschubes 9 noch eine Lufteinblasöffnung 18 vorgesehen, die über eine in der Zeichnung nicht näher dargestellte Luftsteuerung wahlweise verschließbar ist. Der schematisch dargestellt Verschlußmechanismus, der z. B. durch ein Lochraster gebildet sein kann, ist mit dem Bezugszeichen 19 gekennzeichnet.

Um eine möglichst gleichförmige Durchströmung des Tiefzieheinsatzes 11 von unten nach oben zu gewährleisten, ist es zweckmäßig, wenn an der Rückwand des Innenkessels 3 zwei voneinander beabstandete Ventilatoren bzw. Umluftgebläse vorgesehen sind.

## Patentansprüche

1. Wärmeschrank zur Herstellung tiefgezogener Kunststoff-Schäfte, insbesondere für den Prothesenbau, **gekennzeichnet durch** folgende Merkmale:
a) ein im Schrankinnenraum (3) aufrecht festlegbarer, angenähert trichterförmig ausgebildeter Tiefzieheinsatz (11);
b) der Tiefzieheinsatz (11) ist als Luftleiteinrichtung ausgebildet, wobei seine untere, den kleinsten Durchmesser aufweisende Öffnung den Lufteintrittsquerschnitt und seine obere, den größten Durchmesser aufweisende Öffnung den Luftaustrittsquerschnitt definieren;
c) der Tiefzieheinsatz (11) weist unmittelbar oberhalb seiner oberen Luftaustrittsöffnung eine Plattenaufnahme (15) zur angenähert horizontalen Aufnahme einer tiefzuziehenden Kunststofftafel (17) auf;
d) eine die Luft im geschlossenen Kreislauf führende Luftführung (4,5,6) mit zumindest einer oberen, insbesondere die aus dem Tiefzieheinsatz (11) austretende Luft aus dem Schrankinnenraum (3) absaugenden Luftabsaugöffnung (5), an die ein außerhalb des Schrankinnenraumes (3) angeordneter Luftumführkanal (4) angeschlossen ist, der ein Umluftgebläse (7) sowie eine die abgesaugte Luft erwärmende Heizung (8) aufweist und an zumindest eine untere, in den Schrankinnenraum (3) mündende Lufteinblasöffnung (6) angeschlossen ist.

2. Wärmeschrank nach Anspruch 1, **dadurch gekennzeichnet**, daß der Tiefzieheinsatz (11) in eine entsprechende Aussparung (10) eines in den Schrankinnenraum (3) einschiebbaren Einschubs (9) eingesetzt ist.

3. Wärmeschrank nach Anspruch 2, **dadurch gekennzeichnet**, daß die Luftabsaugöffnung (5) oberhalb und die Lufteinblasöffnung (6) unterhalb des Einschubs (9) angeordnet sind.

4. Wärmeschrank nach Anspruch 3, **dadurch gekennzeichnet**, daß auch oberhalb des Einschubs (9) zumindest eine Lufteinblasöffnung (18) vorgesehen ist, die über eine Luftsteuerung wahlweise verschließbar ist.

5. Wärmeschrank nach einem der vorhergehenden Ansprüche, **dadurch gekennzeichnet**, daß in die Plattenaufnahme (15) des Tiefzieheinsatzes (11) ein mit der tiefzuziehenden Kunststofftafel (17) bestückter Spannrahmen (16) eingesetzt ist.

## Claims

1. Heating cabinet for producing deep-drawn plastics shafts, in particular for constructing prostheses, characterised by the following features:
a) a deep-drawing insert (11) which can be fixed upright in the cabinet interior (3) and which is formed so as to be substantially funnel-shaped;
b) the deep-drawing insert (11) is formed as an air-conducting device, with its lower opening, which has the smallest diameter, defining the air inlet cross section and its upper opening, which has the largest diameter, defining the air outlet cross section;
c) the deep-drawing insert (11) has, directly above its upper air outlet opening, a plate receiver (15) for receiving in a substantially horizontal manner a plastics slab (17) which is to be deep-drawn;
d) an air guide (4, 5, 6) which guides the air in closed circuit and has at least one upper air suction opening (5), in particular one which removes by suction out of the cabinet interior (3) the air that is emerging from the deep-drawing insert (11) and to which is connected an air-return channel (4) which is arranged outside the cabinet interior (3), has a circulating air blower (7) and also a heating system (8) heating the air removed by suction and is connected to at least one lower air-injection opening (6) which leads into the cabinet interior (3).

2. Heating cabinet according to claim 1, characterised in that the deep-drawing insert (11) is inserted into a corresponding recess (10) of a plug-in unit (9) which can be plugged into the cabinet interior (3).

3. Heating cabinet according to claim 2, characterised in that the air-suction opening (5) is arranged above the plug-in unit (9) and the air-injection opening (6) is arranged below the plug-in unit (9).

4. Heating cabinet according to claim 3, characterised in that also provided above the plug-in unit (9) there is at least one air-injection opening (18) which can be selectively closed by way of an air control.

5. Heating cabinet according to one of the preceding claims, characterised in that a clamping frame (16), in which is installed the plastics slab (17) that is to be deep-drawn, is inserted into the plate receiver (15) of the deep-drawing insert (11).

## Revendications

1. Etuve pour la fabrication de pièces en forme de fût, en matière synthétique, obtenues par formage profond, en particulier pour la construction de prothèses, caractérisée par les particularités suivantes :
a) une unité de formage profond (11), réalisée sensiblement en forme d'entonnoir, pouvant être fixée en position dressée dans l'espace intérieur de l'étuve ;
b) l'unité de formage profond (11) est conçue en dispositif de canalisation d'air, son extrémité inférieure, présentant le plus petit diamètre, définissant la section d'entrée d'air et son extrémité supérieure, présentant le plus grand diamètre, définissant la section de sortie d'air;
c) l'unité de formage profond (11) présente directement au-dessus de son ouverture supérieure de sortie d'air une monture pour plaque (15), pour recevoir en position sensiblement horizontale une plaque de matière synthétique (17) à former ;
d) un guidage d'air (4, 5, 6) guidant l'air en circuit fermé et comprenant au moins une ouverture supérieure d'extraction d'air (5), extrayant en particulier l'air sortant de l'unité de formage profond (11) pour le faire sortir de l'espace intérieur de l'étuve (3), et à laquelle se raccorde un canal de recirculation d'air (4) agencé hors de l'espace intérieur de l'étuve (3), lequel canal de recirculation présente une soufflante de recirculation (7) ainsi qu'un chauffage (8) réchauffant l'air extrait, et se raccorde à au moins une ouverture inférieure d'insufflation d'air (6) débouchant dans l'espace intérieur (3) de l'étuve.

2. Etuve selon la revendication 1, caractérisée en ce que l'unité de formage profond (11) est engagée dans un évidement correspondant (10) d'un tiroir (9) pouvant être glissé dans l'espace intérieur (3) de l'étuve.

3. Etuve selon la revendication 2, caractérisée en ce que l'ouverture d'extraction d'air (5) est agencée au-dessus du tiroir (9) et l'ouverture d'insufflation d'air (6) en-dessous du tiroir (9).

4. Etuve selon la revendication 3, caractérisée en ce qu'également au-dessus du tiroir (9) est prévue au moins une ouverture d'insufflation d'air (18) qui peut être sélectivement fermée par l'intermédiaire d'une commande de ventilation.

5. Etuve selon l'une des revendications précédentes, caractérisée en ce qu'un cadre de serrage (16) muni du panneau de matière synthétique (17) à former est engagé dans la monture pour plaque (15) de l'unité de formage profond (11).
